# EUROPEAN PATENT APPLICATION

(11) **EP 3 361 142 A1**
(43) Date of publication of application: **15.08.2018**
(21) Application number: 17382058.0
(22) Date of filing: 08.02.2017
(51) Int. Cl.: F21S 8/10, F21V 5/04, F21V 8/00

(54) **LIGHTING DEVICE COMPRISING AN ACTIVE LENS AND METHOD FOR PRODUCING THEREOF**

(71) Applicant: Valeo Iluminacion, 23600 Martos (ES)
(72) Inventor: ALBOU, Pierre, 75013 PARIS (FR); CABANNE, Damien, 23600 MARTOS (ES); FERNANDEZ, Ricardo, 23600 MARTOS (ES); PASTOR, Ramon, 23600 Martos (ES); MORENO, Juan-Francisco, 29620 Torremolinos (ES); MOISY, Eric, 23009 JAEN (ES); MARTINEZ, Juan Manuel, 18014 GRANADA (ES); DUBOSC, Christophe, 93250 VILLEMOMBLE (FR)

(57) **Abstract**

A lighting device (100) comprising: a lens (101) comprising a protrusion (102) for light incoupling, the protrusion extending from a surface of the lens and comprising a light inlet; and a light source coupled to the light inlet. And a method for producing a lighting device (100) comprising: providing a lens (101) with a protrusion for light incoupling, the protrusion (102) extending from a surface of the lens and comprising a light inlet; and coupling a light source to the light inlet.

## Description

### TECHNICAL FIELD

The present invention relates to the field of lighting devices comprising a lens that is used to transmit light. A lighting device according to the invention is particularly suitable for an automotive lamp such as a headlamp or a tail lamp.

### STATE OF THE ART

Lamps, particularly those of a motor vehicle, generally feature a tight space or volume that must be sufficient to house several lighting devices like low-beam, high-beam, signaling, stop and/or parking lights. In addition to providing light, lamps are devices which are also used for increasing the appeal of a vehicle as the aesthetics of the lighting devices themselves, including the lenses, bezels and/or trims, may enhance the overall design of the vehicle. As such, lamps are often used as a distinguishing element of motor vehicles since they also differentiate the carmakers or the models of a same carmaker.

The limited volume and the stringent light regulations that the different lights must comply with render the illumination provided by a lamp complex. Accordingly, new techniques are being developed in order to enhance the appearance of the lighting devices, particularly the headlamps of a motor vehicle, whilst not negatively affecting any lighting devices nearby so that they still comply with the regulations.

An example is the US patent application publication US 2014/0328078 A1 which describes a headlamp assembly comprising a light source and a lens with a film that may selectively adjust its opacity by means of a voltage. As the light goes through the lens and the film, by varying the opacity of the film, different lighting schemes may be provided by the headlamp.

Another example is the Japanese laid-open patent application JP 2012-064533 A that discloses a lighting system for a headlamp or a tail lamp that provides an additional light allegedly without interfering with the other lights of the lamp. Surface light guides are placed right behind an outer cover of the lamp, and a light source is coupled thereto so that the light guides may provide light. The patent application describes that the light guides may be used as daytime running lamps, signaling lamps or tail lights. The addition of a light guide behind the cover of a lamp increases the complexity of the lighting device which, in turn, makes its manufacturing more expensive.

Therefore, there is an interest in providing a lamp with additional lighting and which is both cost-effective and visually appealing.

### DESCRIPTION OF THE INVENTION

The lighting device and the method for producing thereof disclosed in the present invention intend to solve the shortcomings of lighting devices of the prior art.

A first aspect of the invention refers to a lighting device comprising: a lens comprising a protrusion for light incoupling, the protrusion extending from a surface of the lens and comprising a light inlet; and a light source coupled to the light inlet.

The lighting device comprises what is considered to be an active lens since light is first coupled into said lens and, then, coupled out from it, so as to provide light. That is, the lens of the lighting device is used as light transmission means for a light source configured to emit light.

In some embodiments, the lens having the protrusion is the outermost lens of the lighting device, thereby providing improved light transmission. In addition, since fewer parts are involved, the risk of vibration is reduced with respect to existing lighting devices, and the cost is also reduced.

The surface of the lens that the protrusion extends from is preferably an internal surface, or in other words, a surface that when the lighting device is mounted on a lamp casing is not to be exposed to the environment or to the contact by a person or another vehicle.

The lighting device of the present invention may therefore provide an appealing lighting effect on the external surface of the lens, while at the same time being cost effective.

In some embodiments, the lighting device forms part of a closure that may include further lighting devices, that is, the lighting device comprises a closure one side of which includes the lens having a protrusion. That is, owing to the lighting device of the present invention, while the lens provides a lighting effect, it may also be reused for varying the refraction of other lighting devices.

The protrusion of the lens permits coupling the light emitted by the light source into the lens as the protrusion has a light inlet provided therewith. The protrusion is, in some embodiments, adapted to collimate light so as to enhance the light propagation through the lens.

The light inlet may be incorporated to the protrusion in one of: a top surface of the protrusion, a bottom surface of the protrusion, a lateral surface of the protrusion, and at an end of the protrusion.

In some embodiments, the lens further comprises a light guide. The light from the light source is coupled into the light guide so that it may propagate undergoing total internal reflection with no significant loss of optical intensity. Accordingly, in these embodiments, the protrusion further comprises part of the light guide, wherein said part of the light guide is coupled to the light inlet. Therefore, the light may travel through said light guide prior to being coupled out from the lens.

The lens may also be provided, in some embodiments, with optics for coupling light out from the lens. These optics are generally adapted to destroy the total internal reflection within the lens (with or without the light guide) and, thus, enhance the amount of light that exits the lens so as to provide light. In this regard, a surface of the lens may be altered, for example, by providing prisms or stripes thereon, by providing a grained surface (either by directly modifying the surface or by including a grainy film, for instance with a film insert molding process), etc.

Depending on the location of the optics relative to the geometry of the lens, different types of lighting may be provided by the lighting device. As such, the lighting device may be used to provide ambient or signaling lightings, or used as a daytime running lamp, for example.

In some embodiments, the lighting device and/or the lens further comprise coupling optics. In these embodiments, the light source couples light into the lens through the light inlet and by means of the coupling optics so that the light beams may enter into the lens (or, in some embodiments, into the light guide of the lens) with particular trajectories or angles, for example, those producing total internal reflection.

The light source of the lighting device comprises a semiconductor light-emitting device which preferably is one of: an LED, a halogen lamp, and a laser diode.

A second aspect of the invention relates to a method for producing a lighting device comprising: providing a lens with a protrusion for light incoupling, the protrusion extending from a surface of the lens and comprising a light inlet; and coupling a light source to the light inlet.

Accordingly, a lens with a protrusion may be used to provide light. As the protrusion is provided in the lens, a light source may be coupled thereto so that light may enter into the lens and, ultimately, outcoupled from the lens to provide illumination.

In some embodiments, the lens having the protrusion is the outermost lens of the lighting device.

In some embodiments, the protrusion of the lens is adapted to collimate light. As such, the protrusion may include optics for light collimation.

In some embodiments, the method further comprises providing coupling optics for coupling light of the light source into the lens with total internal reflection. That is, the coupling optics may be adapted to reflect or refract light such that a majority of the light beams may travel through the lens undergoing total internal reflection. In this respect, the lighting device and/or the lens may be provided with the coupling optics.

The lens may also comprise a light guide so as to minimize the loss in optical intensity of the light propagating through the lens. In these embodiments in which the lens further comprises a light guide, the protrusion further comprises part of the light guide. Preferably, the part of the light guide in the protrusion is coupled to the light inlet so that light from the light source may be directly (with or without coupling optics provided between the light source and the light inlet) coupled into the light guide.

The lens may further comprise optics for coupling light out from the lens. Therefore, in some embodiments, the lens is also provided with optics that enhance light outcoupling so additional light may be provided by the lighting device. Also, in some of these embodiments, the step of providing the lens with the protrusion for light incoupling comprises manufacturing the lens with optics for coupling light out from the lens. That is, optics for light outcoupling may be incorporated to the lens during its manufacturing. For instance, a surface of the lens may be altered by forming prisms and/or stripes thereon, by graining it, by adding a film (e.g. with a film insert molding process) featuring a geometry adapted to destroy total internal reflection of light, etc.

In some embodiments, the step of providing the lens with the protrusion for light incoupling comprises manufacturing the lens with a one-component or a two-component injection molding process. The lighting device may also include a layer configured to impede viewing the protrusion and/or the light source when the lighting device is inspected; this is convenient from an aesthetics point of view since it is generally desired to only be able to see the light provided by the device and not the components of the device itself (other than the lens). The layer may feature a dark or opaque material that hides, partially or completely, the interior of the lighting device from sight. Both the lens and the layer may be manufactured with a two-component injection molding process, although other processes that may attach the layer to the lens can be used as well.

Further, similar advantages as described for the first aspect of the invention may also be applicable to the second aspect of the invention.

A third aspect of the invention relates to a method for converting a lens of an automotive lamp into a lighting device (preferably an exterior or outermost lens), the method comprising: providing the lens with a protrusion for coupling light into the lens, the protrusion extending from a surface of the lens and comprising a light inlet; and coupling a light source to the light inlet.

Similar advantages as described for the second aspect of the invention may also be applicable to the third aspect of the invention.

A fourth aspect of the invention relates to an automotive lamp comprising a lighting device according to the first aspect of the invention.

The lamp may comprise a lens that is the same as that of the lighting device. Therefore, one or several additional lighting devices within the headlamp may use the lens for refracting the light emitted by additional lighting devices, whereas the lighting device disclosed herein uses said lens as an active lens, that is, for propagating and providing the light of the light source comprised therein.

The automotive lamp may be one of a headlamp and a tail lamp.

Another aspect of the invention refers to an automotive vehicle comprising an automotive lamp according to the fourth aspect of the invention.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A-1B show lighting devices in accordance with embodiments of the invention.
Figures 2A-2C show partial views of protrusions of lighting devices in accordance with embodiments of the invention.
Figure 3A-3B show partial views of lenses of lighting devices in accordance with embodiments of the invention.
Figure 4 shows a lighting device in accordance with another embodiment of the invention.
Figures 5A-5B show lighting devices in accordance with embodiments of the invention illustrating the propagation of light therein.

### DESCRIPTION OF A WAY OF CARRYING OUT THE INVENTION

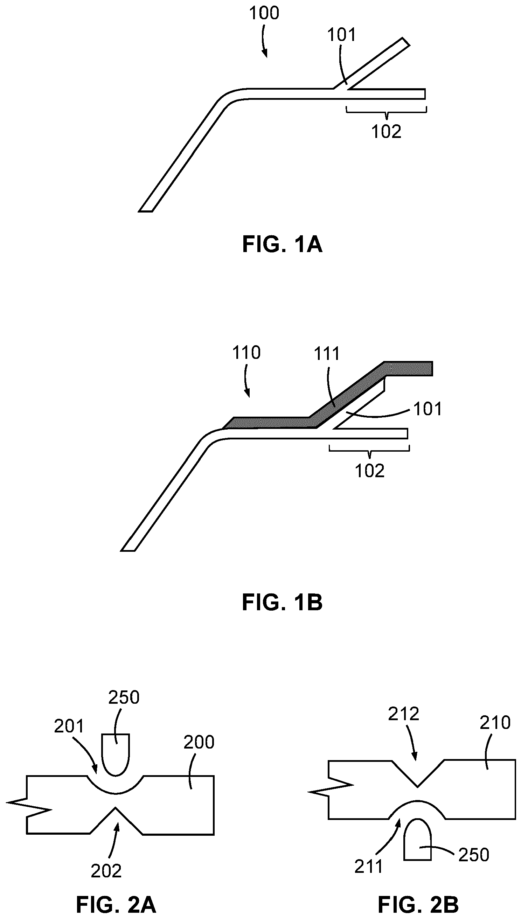

Figure 1 A is a lighting device 100 in accordance with an embodiment of the invention. The lighting device 100 comprises a lens 101 and a light source (not illustrated in Fig. 1 A). The lens 101 includes a protrusion 102 that extends from a surface of the lens 101. Accordingly, the lens 101 comprises a portion that splits in two parts, such that the first part may be used for attaching the lighting device 100 to a closure (e.g. a lamp casing, a cover, etc.), and the second part, that is, the protrusion 102 added to the lens 101, may be used to couple light into the lens 101. In this sense, the protrusion 102 comprises a light inlet; the protrusion may be, for example, any of the protrusions 200, 210, 220 depicted in Figures 2A-2C.

It will readily apparent to the skilled person that the lens 101 can be an outermost lens (or exterior lens) of the lighting device 100, or the lens 101 can be housed within a lamp casing in turn comprising another lens.

The light provided by the light source (cf. the light source 250 shown in any of Figures 2A-2C) that is coupled into the lens 101 by means of the protrusion 102 may undergo total internal reflection until it is coupled out from the lens 101, at which point the lighting device 100 provides illumination.

Figure 1 B is a lighting device 110 in accordance with an embodiment similar to the one of Figure 1 A. The lighting device 110 comprises an exterior lens 101 with a protrusion 102 for light incoupling, and a light source (not illustrated). The device 110 further comprises a layer 111 that impedes viewing the protrusion 102 when the lighting device 110 is inspected from above.

The layer 111 may comprise a material that is opaque and/or features a dark color in order to reduce the visibility of the interior of the lighting device 110; the material may also be the same one of the lens 101. The lens 101 and the layer 111 may be both produced, for example, with a two-component injection molding process.

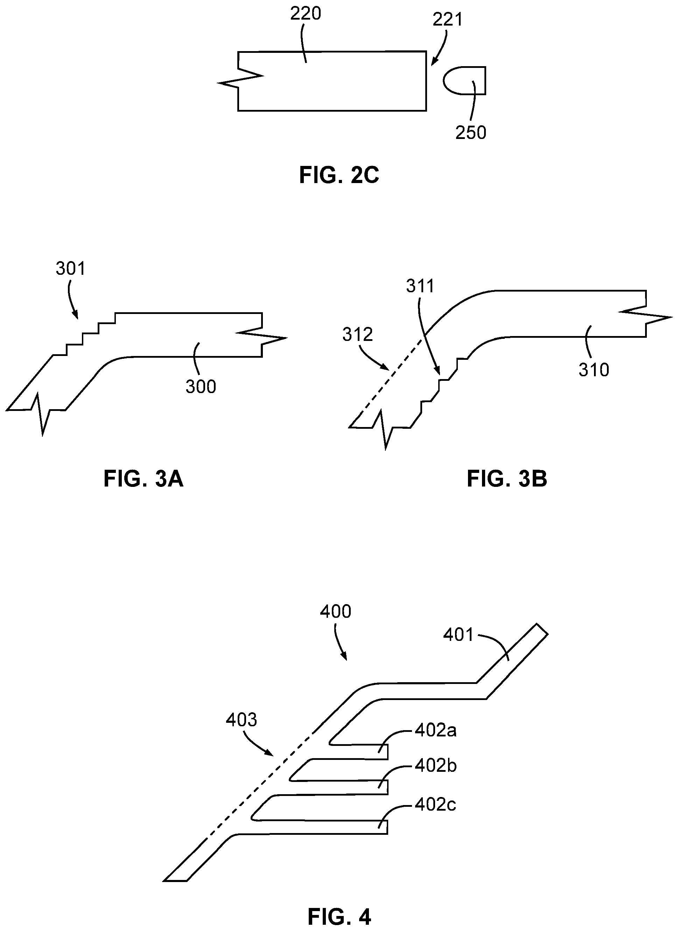

As the light propagates through the lens 101 it may reach a surface of the lens 101 adapted to couple light out from the lens 101. In this regard, the lens 101 may comprise optics for coupling light out from the lens like, for example but not limited to, those shown in Figures 3A-3B.

It is also possible to incorporate a light guide to the lens 101 of any of the embodiments of Figures 1 A-1 B such that part of the light guide is included in the protrusion 102. In these embodiments, the light may propagate through the light guide of the lens 101 until it makes contact with a surface or optics adapted to couple the light out from the lens.

Figures 2A-2C show partial views of protrusions for coupling light into the lens in accordance with different embodiments of the invention.

As shown in Figure 2A, a light source 250 couples light into the protrusion 200, that is, into the lens of the lighting device, through the light inlet 201. The light is forced to propagate towards the remaining part of the lens by means of optics 202 which may reflect, refract, and/or collimate the light provided by the light source 250.

The protrusion 210 of the lens shown in Figure 2B is very similar to the protrusion 200, the only difference being that the light inlet 211 and the optics 212 have their positions swapped, that is, the light inlet 211 is on the bottom surface of the protrusion 210 whereas the optics 212 are on the top surface of the protrusion 210. Changing the position of the inlet 211 and the primary optics 212 with respect to their positions in the protrusion 200 may be convenient from an aesthetics or a free space point of view, however it does not affect the operation of the lighting device.

The protrusion 220 shown in Figure 2C comprises a light inlet 221 at an end of the protrusion 220 itself. This arrangement may entail a simpler implementation since no optics may be necessary for coupling light of the light source 250 into the lens and propagate through it.

Figure 3A partially shows a lens 300 in accordance with an embodiment of the invention. The lens 300 comprises optics 301 for coupling light out from the lens 300; these optics 301 may be formed, for example, altering the surface of the lens 300, including but not limited to, by graining the surface, or by forming prisms and/or stripes on the surface. Owing to the optics 301, the lighting device may provide direct lighting that may be suitable as a daytime running lamp, for example.

Figure 3B partially shows a lens 310 in accordance with another embodiment of the invention. In contrast to the lens 300, the lens 310 comprises optics 311 for coupling light out from the lens in a manner suitable for providing ambient lighting. The light propagating through the lens is outcoupled when the reflection on the optics 311 presents a direction that may go through the external surface 312. In this sense, the external surface 312 may also comprise optics for destroying total internal reflection so that more light may go through it.

The use of optics 301 and 311 is not mutually exclusive, that is, in some embodiments the lens of a lighting device may comprise both kinds of optics combined, e.g. to provide direct and ambient lighting.

Figure 4 is a lighting device 400 in accordance with another embodiment of the invention. The lighting device 400 comprises a lens 401 and at least one light source (not illustrated). The lens 401 comprises three protrusions 402a-402c each of which extends from a surface of the lens 401. In some other embodiments, the lens comprises one, two or more than three protrusions.

Each of the three protrusions 402a-402c includes a light inlet (not illustrated) through which the light from a light source may be coupled into. The protrusions 402a-402c may be, for instance, any of those depicted in Figures 2A-2C.

The lens 401 may comprise optics for light outcoupling, for instance on the external surface 403 right in front of the protrusions, that is, along respective longitudinal axes of the protrusions 402a-402c.

In some embodiments, the lens 401 also comprises a light guide, in which case the protrusions 402a-402c comprise part of said light guide. The light guide is preferably a flat light guide.

Owing to the configuration of the protrusions 402a, 402b, 402c of the lighting device 400, a larger efficiency may be achieved. This means that the ratio between the light intensity outcoupled from the lens 401 and the light intensity coupled into the lens 401 may be greater.

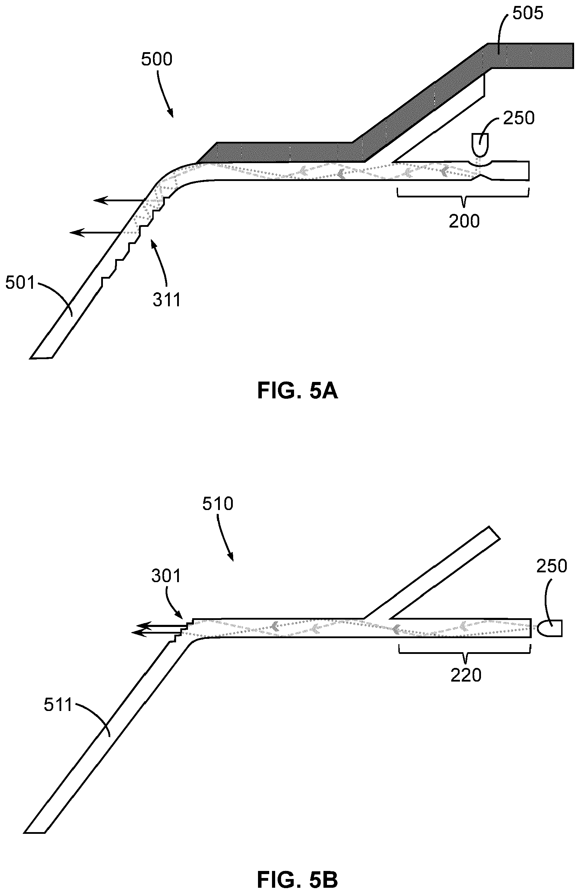

Figure 5A shows a lighting device 500 that comprises a lens 501 including the protrusion 200. The lens 501 also comprises optics 311 so that the device 500 may provide a desired type of lighting.

The figure also shows, as illustrated with grayish dotted and dashed lines, the propagation of light beams as they are emitted by the light source 250. Once emitted, the light beams arrive at the optics 202 in the protrusion 200 where they are reflected, refracted, and/or collimated. Then, by means of total internal reflection, the beams advance through the lens 501 until they reach the optics 311, where they get reflected and, upon reaching the external surface of the lens, outcoupled from the lens (as illustrated with black arrows).

The lighting device 500 further comprises a layer 505 attached to part of the lens. Said layer 505 is adapted to block the protrusion 200 from sight, that is, to prevent a person from seeing the interior of the lighting device 500.

Figure 5B shows a lighting device 510 that comprises a lens 511, said lens 511 including the protrusion 220.

The light source 250 couples light into the lens through a light inlet 221 of the protrusion 220. The light propagates through the lens 511 undergoing total internal reflection (illustrated with grayish dotted and dashed lines). Upon reaching the optics 301, which are adapted to destroy total internal reflection, the light beams are coupled out from the lens thereby the device 510 providing light (as shown with solid black arrows).

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A lighting device (100, 110, 400, 500, 510) comprising:
a lens (101, 300, 310, 401, 501, 511) comprising a protrusion (102, 200, 210, 220, 402a, 402b, 402c) for light incoupling, the protrusion (102, 200, 210, 220, 402a, 402b, 402c) extending from a surface of the lens (101, 300, 310, 401, 501, 511) and comprising a light inlet (201, 211, 221); and
a light source (250) coupled to the light inlet (201, 211, 221).

2. The lighting device of claim 1, wherein the protrusion (102, 200, 210, 220, 402a, 402b, 402c) is adapted to collimate light.

3. The lighting device of any of claims 1-2, wherein the lens (101, 300, 310, 401, 501, 511) further comprises a light guide; and the protrusion (102, 200, 210, 220, 402a, 402b, 402c) further comprises part of the light guide.

4. The lighting device of any of claims 1-3, wherein the lens (300, 310, 501, 511) comprises optics (301, 311) for coupling light out from the lens (300, 310, 501, 511).

5. The lighting device of any of claims 1-4, wherein the lens (501) further comprises coupling optics (202, 212) for coupling light of the light source (250) into the lens (501) with total internal reflection.

6. The lighting device of any of claims 1-5, further comprising a layer (111, 505) attached to part of the lens (101, 501).

7. An automotive lamp comprising a lighting device (100, 110, 400, 500, 510) according to any of claims 1-6, the lamp being one of: a headlamp and a tail lamp.

8. A method for producing a lighting device (100, 110, 400, 500, 510) comprising:
providing a lens (101, 300, 310, 401, 501, 511) with a protrusion (102, 200, 210, 220, 402a, 402b, 402c) for light incoupling, the protrusion (102, 200, 210, 220, 402a, 402b, 402c) extending from a surface of the lens (101, 300, 310, 401, 501, 511) and comprising a light inlet (201, 211, 221); and
coupling a light source (250) to the light inlet (201, 211, 221).

9. The method of claim 8, wherein the protrusion (102, 200, 210, 220, 402a, 402b, 402c) is adapted to collimate light.

10. The method of any of claims 8-9, further comprising providing coupling optics (202, 212) for coupling light of the light source (250) into the lens (101, 300, 310, 401, 501, 511) with total internal reflection.

11. The method of any of claims 8-10, wherein the lens (101, 300, 310, 401, 501, 511) further comprises a light guide; and the protrusion (102, 200, 210, 220, 402a, 402b, 402c) further comprises part of the light guide.

12. The method of any of claims 8-11, wherein the lens (300, 310, 501, 511) further comprises optics (301, 311) for coupling light out from the lens (300, 310, 501, 511).

13. The method of claim 12, wherein providing the lens (300, 310, 501, 511) comprises manufacturing the lens (300, 310, 501, 511) with optics (301, 311) for coupling light out from the lens (300, 310, 501, 511).

14. The method of any of claims 8-12, wherein providing the lens (101, 300, 310, 401, 501, 511) with the protrusion (102, 200, 210, 220, 402a, 402b, 402c) comprises manufacturing the lens with a one-component or a two-component injection molding process.

15. The lighting device of any of claims 1-6 or the method of any of claims 8-14, wherein the lens (101, 300, 310, 401, 501, 511) is an outermost lens of the lighting device (100, 110, 400, 500, 510).
